# EUROPEAN PATENT APPLICATION

(11) **EP 3 531 119 A1**
(43) Date of publication of application: **28.08.2019**
(21) Application number: 18158680.1
(22) Date of filing: 26.02.2018
(51) Int. Cl.: G01N 27/12, G01N 27/14, G01K 17/00

(54) **SENSOR WITH BRIDGE STRUCTURE**

(71) Applicant: Sensirion AG, 8712 Stäfa (CH)
(72) Inventor: Kümin, Cyrill, 8712 Stäfa (CH); Kölbl, Dominikus, 8712 Stäfa (CH); Bartsch, Ulrich, 8712 Stäfa (CH); Rüthemann, Lukas, 8712 Stäfa (CH); Raab, Sebastian, 8712 Stäfa (CH)
(74) Representative: Meyer, Michael Josef

(57) **Abstract**

According to an embodiment of a first aspect of the invention there is provided a sensor for detecting and/or analysing a gas (100). The sensor comprises a substrate (1), a recess or opening (2) arranged in said substrate and a bridge (3) extending over said recess or opening and being anchored in said substrate at two or more anchor areas (10). The bridge has a span length (L) and a thickness. The bridge comprises a temperature modification structure (6), in particular a heating structure and/or a cooling structure, comprising a heating material for heating the bridge and at least two anchor structures (11) in said anchor areas. Each of the anchor structures comprise a base structure comprising a base material (12) and a support structure comprising a support material (13). The support structure is adapted to increase the mechanical stability of the anchor structure. The base material is a dielectric material and different from the support material. The support material is a metallic material and the support structures of both anchor structures extend partly into the recess or opening in a first overlapping area, wherein the first overlapping area has a longitudinal extension into the recess or opening of more than 0.5 times the thickness of the bridge, but of less than 0.25 times of the span length of the bridge.

## Description

### Technical Field

The invention relates to a sensor for measuring fluid parameters, in particular a gas sensor, comprising a recess or opening arranged in a substrate and a bridge extending over said recess or opening. The bridge comprises a temperature modification structure, in particular a heating structure and/or a cooling structure, e.g. a heating structure for heating a hotplate or for performing thermal conductivity measurements. A patch of sensing material, such as a metal oxide, may be located on the hotplate of the bridge, and electrodes for measuring an electrical property of the patch of sensing material may be provided.

### Background Art

US 2014/0208830 describes a gas sensor having a membrane spanning an opening in a silicon substrate. The membrane forms a hotplate and has an integrated tungsten heater. In addition, a platinum layer, separated from the tungsten heater by a dielectric layer, forms electrodes for measuring the resistance of a patch of sensing material.

EP3196639 A1 discloses a gas sensor which comprises a silicon substrate having a recess or opening formed therein. A thin-film bridge is arranged over the recess or opening and forms a hotplate receiving a patch of sensing material. The hotplate is formed by a circular central section of the bridge, which is connected to the substrate by means of two thin arms. A first metal layer of tungsten or platinum or gold and a second metal layer of platinum or gold are arranged in the bridge, separated by a dielectric layer. The first metal layer forms a heater, while the second metal layer forms at least part of the electrodes for contacting the sensing material.

It is an object of the present invention to provide a sensor having bridge structures with enhanced stability.

### Disclosure of the Invention

According to an embodiment of a first aspect of the invention there is provided a sensor for measuring fluid parameters, in particular a gas sensor for detecting and/or analysing a gas. The sensor comprises a substrate, a recess or opening arranged in said substrate and a bridge extending over said recess or opening and being anchored in said substrate at two or more anchor areas. The bridge has a span length and a thickness.

The bridge comprises a temperature modification structure, in particular a heating structure and/or a cooling structure, and at least two anchor structures in said anchor areas. Each of the anchor structures comprise a base structure comprising a base material and a support structure comprising a support material. The support structure is adapted to increase the mechanical stability of the anchor structure. The base material is a dielectric material and the support material is a metallic material. The support structures of both anchor structures extend partly into the recess or opening in a first overlapping area. The first overlapping area has a longitudinal extension (in a longitudinal direction of the bridge) into the recess or opening of more than 0.5 times the thickness of the bridge, but of less than 0.25 times of the span length of the bridge.

Heating structures according to embodiments may comprise a heating material for heating the bridge. Cooling structures according to embodiments may comprise e.g. peltier-elements for cooling the bridge. Embodiments of the invention may comprise a combination of a heating structure and a cooling structure. The cooling structure may facilitate a quicker cool down of a heater of the heating structure. The bridges of such an embodied sensor provide improved stability and endurance. In particular, such an embodied sensor may cope in an advantageous manner with the mechanical stress and strain that may be induced by the thermal heat flows generated by the temperature modification structure, and the corresponding thermal expansion and contraction of the bridge and in particular the anchor structure of the bridge. Furthermore, such an embodied sensor may cope in an advantageous manner with mechanical stress and strain that may be induced during fabrication of the sensor as well as during operation of the sensor for the respective application. Investigations of the applicant have resulted in the insight that a combination of the support structure and the base structure may substantially increase the stability and endurance of the anchor structure and therewith the bridge. Such a support structure may be successfully integrated despite the small dimensions that these bridges usually have.

The support structure may in particular comprise dedicated metals and may have dedicated forms, which provide advantageous mechanical properties and thereby make the anchor area more rigid and/or result in uniformly distributed changes of the stress and strain levels within the anchor area.

Anchor structures according to embodiments of the invention may in particular improve torsion stiffness or reduce stress gradients along the path from the free-standing bridge to bulk areas of the substrate.

The combination of the minimum longitudinal extension (0.5 times the thickness of the bridge) of the support structure into the recess or opening on the one hand and the maximum longitudinal extension of 0.25 times the span length of the bridge on the other hand provides advantageous bridge properties. In particular, it improves the mechanical stability of the bridge without significantly increasing thermal losses of the temperature modification structure. More particularly, due to the maximum longitudinal extension of the support structure thermal losses from the bridge to the substrate are limited.

The thickness of the bridge may be defined as a maximum extension of the bridge in a vertical direction, wherein the vertical direction is a direction perpendicular to the longitudinal extension of the bridge and perpendicular to a lateral extension of the bridge. The longitudinal extension of the bridge extends between the two anchor areas of the bridge.

The span length is understood as the length that the bridge spans over the recess or opening of the substrate.

The sensor may measure a parameter of a fluid, wherein a fluid may be a gas, a liquid or an aerosol. Sensors according to embodiments of the invention include particulate matter (PM) sensors.

According to embodiments, the longitudinal extension of the support structures into the recess or opening is less than 0.2 times the span length of the bridge, in particular less than 0.1 times the span length of the bridge. According to further preferred embodiments the longitudinal extension of the support structures into the recess or opening is in a range between 1 and 100 micrometers, in particular in a range between 10 and 20 micrometers.

According to embodiments, the anchor structure has a tapered outline. The tapered outline is adapted to increase the physical dimensions of the bridge from an inner area of the bridge towards the substrate. In at least part of each anchor area an increase of the width of the bridge in a lateral direction is provided, in particular an increase to between 3 times and 7 times of the width in the inner area. According to embodiments the tapered outline continuously increases the width towards the substrate. According to embodiments, the tapered outline is rounded with a radius between one time and three times of the width in the inner area of the bridge. According to embodiments, the tapered outline provides in addition an increase of the thickness of the bridge in a vertical direction.

Such embodiments provide a particularly stable anchor structure.

More particularly, such embodied anchor structures introduce a lateral and/or vertical design/shape/profile, which is continuously increasing the physical dimensions of the microstructure of the bridge to converge towards the bulk substrate. In this way the free-standing microstructure of the bridge starts out from the bulk region with much larger size avoiding an abrupt transition from microscopic to macroscopic dimensions.

An adaption of the lateral dimension only within the limited anchor area allows to improve the mechanical stability without significant impact on other mechanical and/or thermal properties such as mechanical flexibility, stiffness, vibrational modes and/or heat conduction of the bridge.

A fabrication of such anchor structures may be facilitated by "stop layers/stopping elements" with high robustness against the processes for the release of the microstructure from the bulk materials. The lateral design of those stop layers/stopping elements can be favorably exploited to form stepwise changes of the vertical dimension/thickness of the bridge.

According to preferred embodiments, the support structure extends at least 50%, in particular over at least 80% of the anchor length of the tapered outline.

The anchor length of the tapered outline is understood as the length of the tapered outline in the longitudinal direction of the bridge.

According to embodiments, the support structure is separated from the current lead by the dielectric material of the base structure. This may further improve the stability of the anchor structure.

According to embodiments, the support structure is adapted to improve one or more mechanical parameters of the anchor structure, in particular the rigidity of the anchor structure and/or the uniformity of the stress and strain levels of the anchor structure.

According to preferred embodiments, the base material of the base structure has a different Young's modulus than the support material of the support structure. According to some embodiments, the base material of the base structure has a lower Young's modulus than the support material of the support structure. In other words, the base structure is more elastic than the support structure. In yet other words, the support structure is more rigid than the base structure.

According to other embodiments, the base material of the base structure has a higher Young's modulus than the support material of the support structure. In other words, the base structure is less elastic than the support structure. In yet other words, the support structure is less rigid than the base structure.

Such embodiments have been found to provide a particularly favourable mechanical stability.
According to preferred embodiments, the compressive strength of the base material is different from the compressive strength of the support material. According to some embodiments, the compressive strength of the base material is lower than the compressive strength of the support material. According to other embodiments, the compressive strength of the base material is higher than the compressive strength of the support material.

According to embodiments, the support structure may comprise a plurality of layers of support material. This provides additional design flexibility.

According to some embodiments, the support structure is arranged on top of and/or below the base structure. This provides additional independent space for the support structure and avoids that the support structure interferes with the current leads in terms of space requirements. Furthermore, this may facilitate ease of fabrication.

According to other embodiments, the support structure may be embedded within the base structure. This may facilitate a dense integration.

According to embodiments, the support material of the support structure may be in particular Al, Cu, Pt, W, Ti or TiN. According to such embodiments, the support structure is electrically inactive. In other words, the metallic support structure is not electrically connected to any electrical devices. Furthermore, the metallic support structure is according to embodiments not connected to any electrical circuitry except for a possible coupling to ground and it does not provide any electrical function for the sensor. It only serves the purpose of enhancing the stability of the anchor structure.

According to embodiments, the support material is a material which may be also used for the fabrication of separate functional elements, e.g. ASIC elements, on the bulk regions of the substrate. This facilitates the integration of the support structure.

According to embodiments, electrical or electronic circuitry of the sensor may be formed by CMOS processing techniques.

According to embodiments, the support materials are materials which may be used by CMOS fabrication techniques. This facilitates CMOS integration of the support structure.

According to embodiments, the sensor is a CMOS sensor and the support structures are specifically designed to increase the stability of the bridge. In particular, the support structures are not dummy filling structures required according to CMOS design rules.

According to embodiments, the support structure extends partly over and/or into the substrate in a second overlapping area.

Such an overlapping further facilitates the mechanical stability of the anchor structure.

According to embodiments, the supporting structure is only arranged within the limited anchor area. This may allow to improve the mechanical stability of the bridge without significant impact on other mechanical or thermal properties, e.g. the mechanical flexibility, the stiffness, the vibrational modes and/or the heat conduction of the bridge.

According to embodiments, the support structure has a tapered outline and the tapered outline is adapted or in other words formed to provide an increasing width and/or an increasing height of the support structure from an inner area of the bridge towards the substrate.

According to particularly preferred embodiments, both the anchor structure and the support structure have a tapered form/outline.

According to embodiments, the tapered outline of the anchor structure and the tapered outline of the support structure run or in other words extend at least partly parallel to each other. This facilitates a mechanical interaction of the tapered anchor structure and the tapered support structure.

According to embodiments, the support structure comprises a cross sectional profile which encloses the current lead of the temperature modification structure.

This provides space efficiency with enhanced mechanical stability.

According to further embodiments, the support structure comprises one or more T-beam structures and/or one or more double-T-beam structures.

Such T-beam or double T-beam structures enhance the stability of the anchor structure in an efficient way.

According to further embodiments, a first T-beam structure or a first double-T-beam structure is arranged laterally adjacent to the current lead and a second T-beam structure or a second double-T-beam structure is arranged laterally adjacent to the current lead and opposite to the first T-beam structure and the first double-T-beam structure respectively.

According to further embodiments, the sensor may be a thermal conductivity sensor or a thermal diffusivity sensor for measuring a thermal conductivity or a thermal diffusivity of a fluid, in particular of a gas. The sensor may comprise a heating bridge comprising a heating structure as well as a first sensing bridge and a second sensing bridge adjacent to the heating bridge. The first sensing bridge and the second sensing bridge each comprise a temperature sensor to perform a temperature measurement.

Other advantageous embodiments are listed in the dependent claims as well as in the description below.

### Brief Description of the Drawings

The invention will be better understood and objects other than those set forth above will become apparent from the following detailed description thereof. Such description refers to the annexed drawings, wherein:
All top views of the central part of the bridge show the patch of sensing material in transparent manner, with the structures below it in dashed or dotted lines. The drawings are not to scale. Furthermore, some of the top views may show the substrate and/or the base material of the base structures in a transparent manner to facilitate a better illustration of the underlying embedded support structures or and/or temperature modification structures.

Fig. 1 shows a gas sensor with a single bridge according to an embodiment of the invention;
Fig. 2 shows a gas sensor with multiple bridges operable as MOX gas sensor;
Fig. 3 shows a gas sensor embodied as thermal conductivity sensor for measuring a thermal conductivity of a gas;
FIG. 4a shows a top view of an anchor area according to an embodiment of the invention;
FIG. 4b shows a corresponding cross sectional view taken along the section line 'IV' shown in FIG. 4a.
FIG. 5a shows a top view of another anchor area according to another embodiment of the invention;
FIG. 5b shows a corresponding cross sectional view taken along the section line 'V' shown in FIG. 5a;
FIG. 6a shows a top view of another anchor area according to another embodiment of the invention;
FIG. 6b shows a corresponding cross sectional view taken along the section line 'VI' shown in FIG. 6a;
FIG. 7a shows a top view of another anchor area according to another embodiment of the invention;
FIG. 7b shows a corresponding cross sectional view taken along the section line 'VII' shown in FIG. 7a;
FIG. 8a shows a top view of another anchor area according to another embodiment of the invention;
FIG. 8b shows a corresponding cross sectional view taken along the section line 'VIII' shown in FIG. 8a;
FIG. 9a shows a top view of another anchor area according to another embodiment of the invention;
FIG. 9b shows a corresponding cross sectional view taken along the section line 'IX' shown in FIG. 9a;
FIG. 10a shows a top view of another anchor area according to another embodiment of the invention;
FIG. 10b shows a corresponding cross sectional view taken along the section line 'X' shown in FIG. 10a;
FIG. 11 a shows a top view of another anchor area according to another embodiment of the invention;
FIG. 11b shows a corresponding cross sectional view taken along the section line 'XI' shown in FIG. 10a;
FIG. 12a shows a top view of another anchor area according to another embodiment of the invention;
FIG. 12b shows a corresponding cross sectional view taken along the section line 'XII' shown in FIG. 10a;
FIG. 12c shows a corresponding cross sectional view of an embodiment taken along the section line 'XIII' shown in FIG. 12b;
FIG. 12d shows a corresponding cross sectional view of another embodiment taken along the section line 'XIII' shown in FIG. 12b;
FIG. 12e shows a corresponding cross sectional view taken along the section line 'XIII' shown in FIG. 12b;
FIG 13 shows a top view of a central part of the bridge of the gas sensor;
FIG 14 shows a cross sectional view along line XIII-XIII of FIG. 13; and
FIG. 15 shows the structures in the first metal layer of the embodiment of FIG. 13; and
FIG. 16 shows the structures in the second metal layer of the embodiment of FIG. 13

### Modes for Carrying Out the Invention

### Definitions:

Terms such as "top", "bottom", "above", "below" are used in the sense that the side of the substrate that carries the bridges is the top side of the substrate.

The terms "radial" and "azimuthal" describe directions with respect to the center point of the hotplate, with "radial" designating a direction towards or away from the center point and "azimuthal" a direction tangential to a circle around the center point.

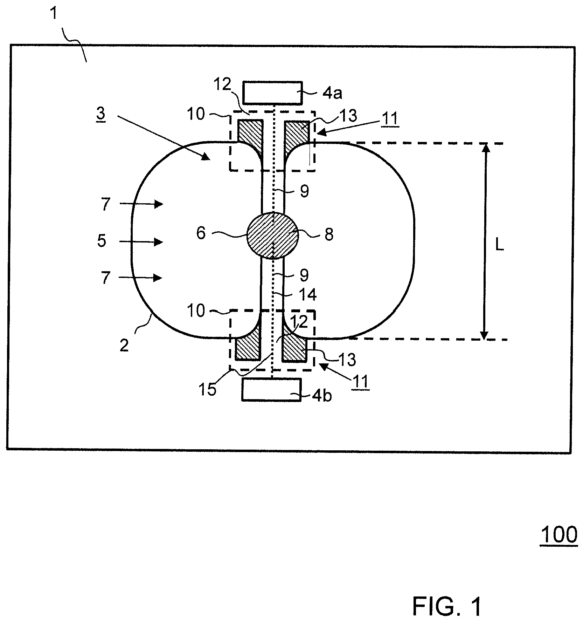

Fig. 1 shows a gas sensor 100 according to an embodiment of the invention. The gas sensor 100 comprises a substrate 1, a recess or opening 2 arranged in said substrate 1 and a bridge 3 extending over said recess or opening 2 and being anchored in said substrate 1 at two or more anchor areas 10. The substrate 1 is in particular a substrate of silicon.

Further, substrate 1 carries integrated CMOS circuitry 4a and 4b, e.g. including circuitry for driving heaters and processing signals from electrodes and temperature sensors as will be further described below. Advantageously, processing circuitry 4a, 4b is integrated in CMOS technology and the whole device described herein may be compatible with current CMOS manufacturing processes according to embodiments. Having the CMOS circuitry on-board of substrate 1 allows to reduce the number of bonds to the substrate and to increase signal-to-noise ratio.

The bridge 3 comprises a central region 5 forming a hotplate 6 and two arms 7 extending between central region 5 and substrate 1. Each of the arms 7 comprise an anchor structure 11 in anchor areas 10, thereby suspending the bridge 3 and the hotplate 6 over the recess or opening 2. The anchor structures 11 comprise a base structure 12 comprising or consisting of a base material and a support structure 13 comprising or consisting of a support material. The support structure 13 is illustrated by a diagonal pattern and is designed such that it increases the mechanical stability of the anchor structure 11. Hence, the anchor structure 11 is formed by two different structures, namely the support structure 11 and the base structure 12. The support structure 13 and the base structure 12 operate together and increase in combination the mechanical stability of the anchor structure 11, in particular one or more mechanical parameters of the anchor structure 11. According to an embodiment, the support structure 13 increases as mechanical parameter the rigidity of the anchor structure 11. According to another embodiment, the support structure 13 may increase the uniformity of the stress and strain levels of the anchor structure 11.

The base material of the base structure 12 is in particular a dielectric material and it is a different material than the support material of the support structure 13. As can be seen in Fig. 1, there are two arms 7 for the bridge 3, with the arms extending collinear to each other and with the central region 5 being arranged between them. The bridge 3 has a length L.

A patch 8 of sensing material is arranged on the hotplate 6. The sensing material is a material that changes at least one electrical property (in particular the real or imaginary part of its electrical impedance) as a function of the composition of the gas that surrounds it. The change of the property can be measured in order to obtain information on said composition.

The sensing material can e.g. contain at least one metal oxide material. Such metal oxide material generally may include one or more of tin oxide, zinc oxide, titanium oxide, tungsten oxide, indium oxide and gallium oxide. Such metal oxides may be used for the detection of analytes such as VOCs, carbon monoxide, nitrogen dioxide, methane, ammonia or hydrogen sulphide. Metal oxide sensors are based on the concept that gaseous analytes interact with the metal oxide layer at elevated temperatures of the sensitive layer in the range of more than 100 °C, and specifically between 250 °C and 350 °C. As a result of the catalytic reaction, the conductivity of the sensitive film may change, which change can be measured. Hence, such gas sensors are also denoted as high temperature chemoresistors for the reason that a chemical property of the analyte is converted into an electrical resistance at high temperatures of the sensitive film.

The bridge 3 may comprise various electrical circuitry 9 including functional elements for operating the bridge 3. In particular, the electrical circuitry 9 may be embodied as or encompass as temperature modification structure a heating structure 14 comprising a heating material and adapted to heat the hotplate 6. The electrical circuitry 9 is schematically illustrated in a simplified way by dotted lines in FIG. 1 for visual clarity reasons and will be described in more detail below. The electrical circuitry 9 may encompass a temperature sensor to measure the temperature of the bridge 3 and electrodes adapted to measure an electrical property of the patch 8. The functional elements of the electrical circuitry 9 may be formed in particular by tungsten, titanium nitride, titanium or platinum.

At least one of the anchor structures 11 comprises as electrical circuitry a part of the heating structure, in particular as current leads one or more heater leads 15 which provide as interconnect circuitry an electrical connection between the heating structure 14 of the electrical circuitry 9 and the CMOS circuitry 4a and 4b. The electrical circuitry 9, the heating structure 14 and the heater leads 15 are commonly indicated by a dotted line.

The support structure 13 of the anchor structure 11 is separated from the heating structure, in particular the heater leads 15, by the dielectric material of the anchor base structure 12.

According to embodiments, the base material of the base structure 12 has a lower Young's modulus than the support material of the support structure 13. Hence according to embodiments, the support structure 13 is more rigid and less elastic than the base structure 12. This improves the mechanical stability of the anchor structure 11 in an advantageous way.

The support material of the support structure 13 is a metal, in particular Al, Cu, Pt, W, Ti or TiN or a composition or combination of these materials Nevertheless, the support structure 13 is electrically inactive and not electrically connected to any of the electrical circuitry 9 However, as an exception, the metallic support structure 13 may be coupled to ground according to embodiments.

The support structures 13 are specifically designed to increase the stability of the bridge 3. Importantly, the support structures 13 are not dummy filling structures which are required by CMOS design rules, but have been designed independently and solely for the purpose of improving one or more mechanical properties of the bridge 3.

Structures of the type shown in Fig. 1 can e.g. be built using techniques such as described in EP 2278308 or US 2014/0208830.

In particular, the process for manufacturing comprises the steps of forming a plurality of dielectric and metal layers on top of substrate 1. Some of these layers may be deposited in the course of the process for forming the CMOS circuitry 4a, 4b, e.g. as intermetal dielectric layer and metal layers, while other layers may be applied during post-processing, such as a tensile silicon nitride layer. Then, recess or opening 2 is formed using selective, anisotropic etching techniques. The patches 8 of sensing material can e.g. be applied using dispensing techniques where a drop or several drops of a liquid precursor of the sensing material is applied to the hotplates, such as e.g. described in EP 2952885.

Gas sensors according to embodiments of the invention comprise advantageously several bridges. The different bridges can e.g. be operated at different temperatures, may have different sensing materials or may serve different purposes, which allows to measure several parameters of the gaseous environment at once, thereby gaining a better understanding of its composition.

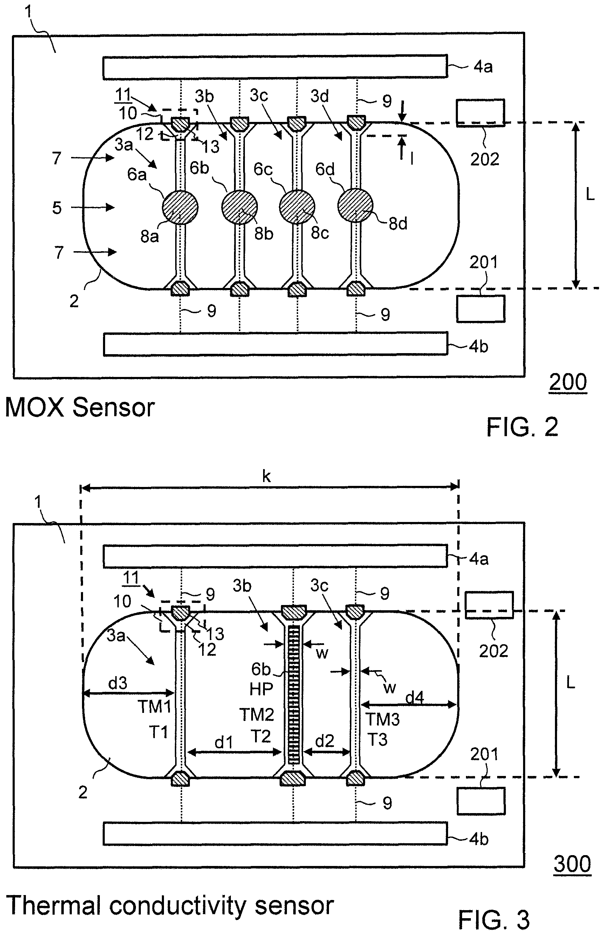

Fig. 2 shows a gas sensor 200 for detecting and/or analysing a gas. The sensor 200 operates as MOX gas sensor and comprises a substrate 1, in particular a substrate of silicon. The substrate 1 has an opening or recess 2 arranged therein. The sensor 200 comprises a plurality of separate bridges or bridge structures that span this opening or recess 2. The terms bridge and bridge structure may be used in the following interchangeably. More particularly, the sensor 200 comprises a first bridge 3a that forms a first hotplate 6a, a second bridge 3b that forms a second hotplate 6b, a third bridge 3c that forms a third hotplate 6c and a fourth bridge 3d that forms a fourth hotplate 6d. In the following it may be referred to the plurality of bridges, e.g. the plurality of bridges 3a, 3b, 3c and 3d, collectively as bridges 3 or bridge structures 3 and to the plurality of hotplates, e.g. the hotplates 6a, 6b, 6c and 6d collectively as hotplates 6.

The sensor 100 comprises a first patch 8a of sensing material arranged on the first hotplate 6a, a second patch 8b of sensing material arranged on the second hotplate 6b, a third patch 8c of sensing material arranged on the third hotplate 6c and a fourth patch 8d of sensing material arranged on the fourth hotplate 6d. The sensing material may be in particular a metal oxide material. The sensing patches 8a, 8b, 8c and 8d may comprise the same sensing material or different sensing materials.

Each of the bridges 3a, 3b, 3c and 3d comprises a central region 5 forming the hotplates 6a, 6b, 6c and 6d respectively, and two arms 7 extending between the central regions 5 and the substrate 1, thereby suspending the hotplates 6a, 6b, 6c and 6d over recess or opening 2.

Each of the bridges 3a, 3b, 3c and 3d comprises electrodes adapted to measure an electrical property of the first patch 8a, the second patch 8b, the third patch 8c and the fourth patch 8d. Furthermore, each of the bridges 3a, 3b, 3c and 3d comprises a heater or a heating structure adapted to heat the first hotplate 6a, the second hotplate 6b, the third hotplate 6c and the fourth hotplate 6d, respectively. In addition, each of the bridges 3a, 3b, 3c and 3d comprises a temperature sensor to measure the temperature of the respective bridge structure. The electrodes, heaters and temperature sensors are not shown in detail in FIG. 2 for visual clarity reasons and are collectively denoted as electrical circuitry 9 and shown in a simplified manner by a dotted line.

The sensor 200 may comprise in addition a humidity sensor 201 for measuring a relative humidity of the gas surrounding the sensor 100 as well as a pressure sensor 202 to determine the pressure of the gas surrounding the sensor.

Each of the arms 7 of the bridges 3 comprises an anchor structure 11 in anchor areas 10, thereby suspending the respective bridge 3 and the hotplate 6 over the recess or opening 2. The anchor structures 11 comprise a base structure 12 comprising or consisting of a base material and a support structure 13 comprising or consisting of a support material as described above with reference to FIG. 1.

Fig. 3 shows a gas sensor 300 according to another embodiment of the invention. More particularly, the gas sensor 300 is embodied as thermal conductivity sensor or thermal diffusivity sensor for measuring a thermal conductivity or a thermal diffusivity of a fluid.

The gas sensor 300 comprises a bridge 3b comprising a heating structure/hotplate 6b. The heating structure 6b is configured to heat the gas surrounding the bridge 3b with a constant or dynamic heating power HP. The heating structure 6b extends over substantially the whole length of the bridge 3. To control the heating power, the gas sensor 300 performs a temperature measurement TM2 of the hotplate 6b.

The gas sensor 300 comprises two further bridges 3a and 3c adjacent to the bridge 3b.

The further bridges 3a and 3c comprises both an integrated temperature sensor as part of the electrical circuitry 9 and may be simultaneously operated in a sensing mode to perform a measurement of a temperature change in response to the heating power HP. More particularly, bridge 3 a performs a temperature measurement TM1 and bridge 3c performs a temperature measurement TM3. The bridges 3a, 3c may also be denoted as sensing bridges and the bridge 3b as heating bridge. The bridge 3a may also be denoted as first sensing bridge and the bridge 3c as second sensing bridge.

The sensor 300 may then determine the thermal conductivity of the gas e.g. from the ratios of the temperature T2 of the heat generating bridge structure 3b to the temperatures T1 and T3 of the bridge structures 3a and 3c, respectively.

As illustrated in FIG. 3, the bridge 3a is arranged at a distance d₁ from the bridge 3b and the bridge 3c is arranged at a different distance d₂ from the bridge 3b. The different distances can be used to perform differential measurements in order to eliminate the thermal transitions between the gas and the respective hotplate/bridge structure.

Each of the bridges 3 comprises two anchor structures 11 in anchor areas 10, thereby suspending the respective bridge structure 3 over the recess or opening 2. The anchor structures 11 comprise a base structure 12 comprising or consisting of a base material and a support structure 13 comprising or consisting of a support material as described above with reference to FIG. 1. The support structure 13 is illustrated with a diagonal pattern.

The bridges 3 of the thermal conductivity sensor 300 may comprise in particular silicon oxide, silicon nitride or silicon oxy-nitride (SiON) as base material. The functional elements of the outer bridges 3a, 3c, in particular the temperature sensor, may in particular comprise embedded functional elements of aluminum, Al-Cu, poly silicon or "N+ poly silicon - P+ poly silicon". The inner bridge 3b may comprise in particular a heating structure of poly silicon. The support structures 13 of all three bridges 3a, 3b and 3c may comprise in particular a layer of poly-silicon and a layer of aluminum, separated by a dielectric layer.

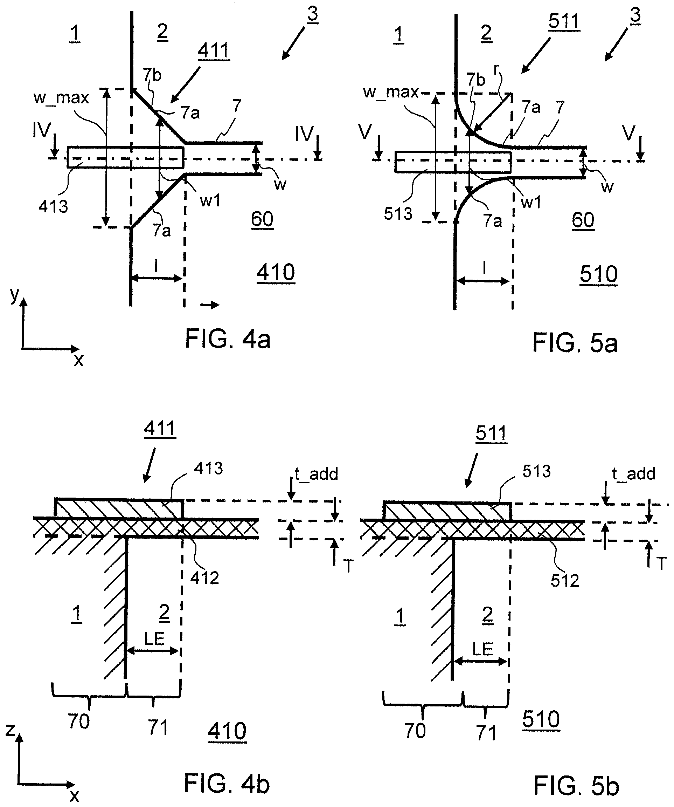

Embodiments of the anchor structure 11 may have various geometries which will be described in the following in more detail with reference to FIGS. 4a to 12e.

FIG. 4a shows a top view of an anchor area 410 of a bridge 3 according to an embodiment of the invention and FIG. 4b a corresponding cross sectional view taken along the section line 'IV-IV' shown in FIG. 4a. The anchor area 410 comprises an anchor structure 411 that has a tapered outline. The anchor structure structure 411 comprises a base structure 412 and a support structure 413 arranged on top of the base structure 412, i.e. vertically in the z-direction above the base structure 412. The bridge 3 has a thickness T in the vertical z-direction and the support structure 413 an additional thickness in the vertical z-direction t_add. Hence the thickness T of the bridge is understood as the extension of the bridge 3 in the vertical z-direction in the inner area 60, i.e. without the additional thickness t_add. The support structure 413 extends partly over the substrate 1 in a second overlapping area 70 and partly over or into the recess or opening 2 in a first overlapping area 71. The first overlapping area 71 has a longitudinal extension LE (in a longitudinal x-direction of the bridge 3) into the recess or opening 2 of more than 0.5 times of the thickness T of the bridge 3. Furthermore, the longitudinal extension is less than 0.25 times of the span length L of the bridge. The span length L is understood as the length that the bridge 3 spans over the recess or opening 2 of the substrate 1 (see e.g. FIGS. 1, 2 and 3).

The support structure 413 increases the mechanical stability of the anchor structure 411.

More particularly, the anchor area 410 has a width w1 that increases from an inner area 60 of the bridge 3 having a width w, which may also be denoted as starting width w, towards the substrate 1. In other words, the arms 7 of the bridge 3 have a tapered portion 7a that forms a part of the anchor area 410 and has an increasing width w1 in a lateral y-direction of bridge 3. The edge 7b of the tapered portion 7a of the bridge 3 has a straight form according to this embodiment. The width w1 increases until a maximum width w_max of the tapered outline at the intersection of the tapered outline with the substrate 1. The maximum width w_max may be in particular between 3 and 7 times larger than the starting width w in the inner area 60. The tapered outline of the anchor structure 411 extends over an anchor length 1 in the longitudinal x-direction of the bridge 3 into the recess or opening 2. It should be noted that the span length L includes the longitudinal extension of the tapered portion 7a of the bridge 3. In other words, the span length L includes the anchor length 1 of the tapered portion 7a, as also illustrated in FIG. 2.

FIG. 5a shows a top view of an anchor area 510 of a bridge 3 according to another embodiment of the invention and FIG. 5b a corresponding cross sectional view taken along the section line 'V-V' shown in FIG. 5a.

The anchor area 510 comprises an anchor structure 511 that has also a tapered outline. The anchor structure structure 511 comprises a base structure 512 and a support structure 513 arranged on top of the base structure 512, i.e. vertically in the z-direction above the base structure 512. The support structure 513 extends partly over the substrate 1 in a second overlapping area 70 and partly over the recess or opening 2 in a first overlapping area 71. The support structure 513 increases the mechanical stability of the anchor structure 411.

The arms 7 of the bridge 3 have a tapered portion 7a that forms a part of the anchor area 510 and provides an increasing width w1 in a lateral y-direction of bridge 3. The edge 7b of the bridge 3 has a tapered portion with curved or rounded edges. According to this embodiment the edge 7b forms an arc, in particular a circular arc. The radius r of the circular arc is between one time and three times of the width/starting width w in the inner area 60 of the bridge 3.

The maximum width w_max may be in particular between 3 and 7 times larger than the starting width w in the inner area 60.

According to embodiments, the structures illustrated in FIGS. 4a, 4b, 5a and 5b may also comprise heating structures.

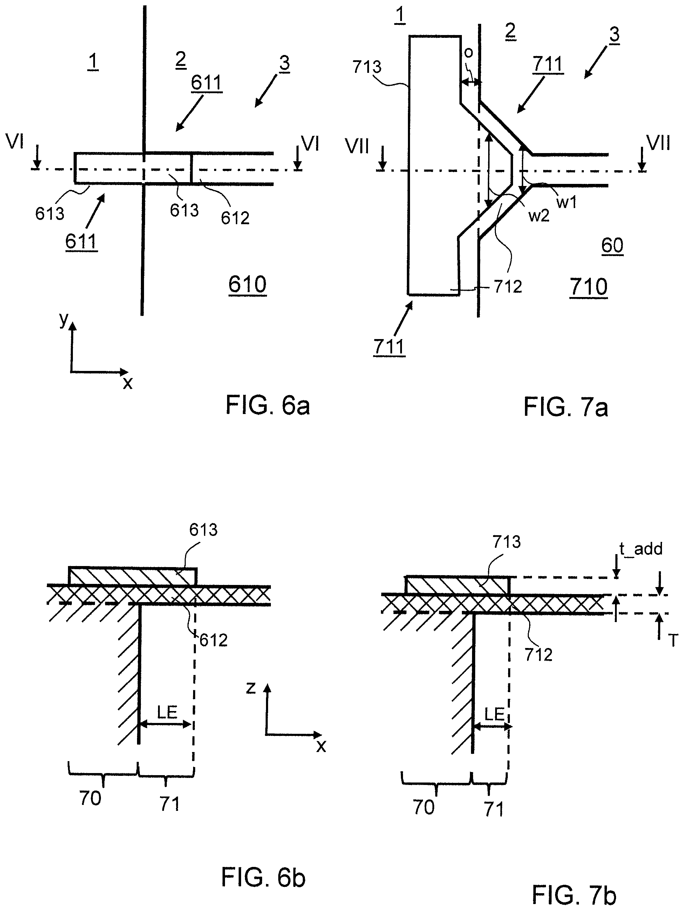

FIG. 6a shows a top view of an anchor area 610 according to another embodiment of the invention and FIG. 6b a corresponding cross sectional view taken along the section line 'VI-VI' shown in FIG. 6a. The bridge 3 comprises an anchor structure 611 having a base structure 612 and a support structure 613 arranged on top of the base structure 612, i.e. vertically in the z-direction above the base structure 612. The support structure 613 extends partly over the substrate 1 in a second overlapping area 70 and partly over the recess or opening 2 in a first overlapping area 71. The support structure 613 increases the mechanical stability of the anchor structure 611.

The additional top layer of the support structure 613 may according to embodiments be formed using the same material as within the bridge 3 or by a different material. Further or in addition, the increased thickness within the anchor area 610 can also be realized by an increase of the physical dimensions at the bottom side of the suspended bridge 3.

FIG. 7a shows a top view of an anchor area 710 according to another embodiment of the invention and FIG. 7b a corresponding cross sectional view taken along the section line 'VII-VII' shown in FIG. 7a. The bridge 3 comprises an anchor structure 711 having a base structure 712 and a support structure 713 arranged on top of the base structure 712. The support structure 713 extends partly over the substrate 1 in a second overlapping area 70 and partly over the recess or opening 2 in a first overlapping area 71. According to this embodiment, the base structure 712 as well as the support structure 713 have a tapered outline. More particularly, the base structure 712 provides an increasing width w₁ from an inner area 60 of the bridge 3 towards the substrate 1 and the support structure 713 has also an increasing width w₂ in a direction towards the substrate 1. The tapered outline of the base structure 712 and the tapered outline of the support structure 713 run parallel to each other with an offset o. The bridge 3 has a thickness T in the vertical z-direction and the support structure 713 an additional thickness in the vertical z-direction t_add.

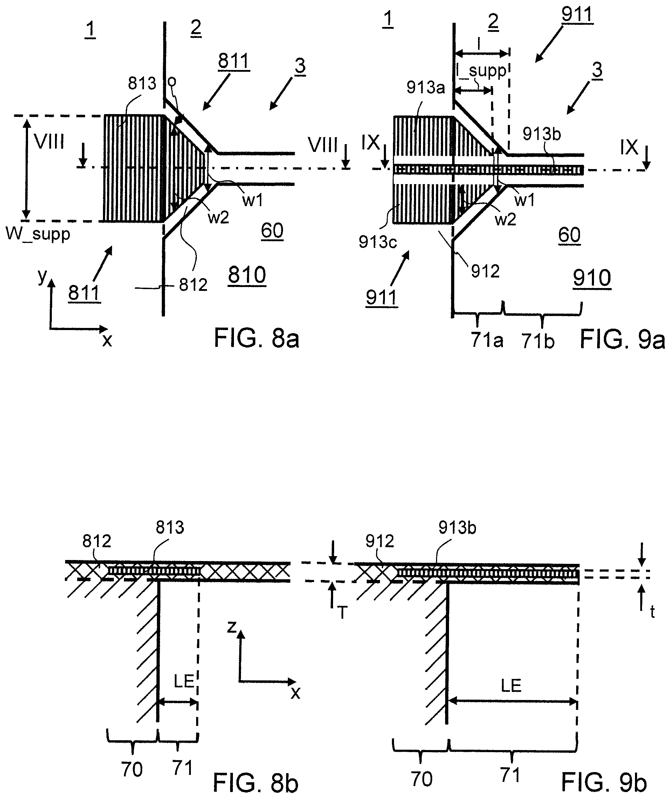

FIG. 8a shows a top view of an anchor area 810 according to another embodiment of the invention and FIG. 8b a corresponding cross sectional view taken along the section line 'VIII-VIII' shown in FIG. 8a. The bridge 3 comprises an anchor structure 811 having a base structure 812 and a support structure 813 embedded within the base structure 812. For ease of illustration, the base material of the base structure 812 is shown in a transparent manner for the top view. The support structure 813 extends partly over the substrate 1 in a second overlapping area 70 and partly over the recess or opening 2 in a first overlapping area 71. The base structure 812 as well as the support structure 813 have a tapered outline. More particularly, the base structure 812 has an increasing width w₁ from an inner area 60 of the bridge 3 towards the substrate 1 and the support structure 813 has an increasing width w₂ within the overlapping area 71 in a direction towards the substrate 1, more particularly in a negative x-direction. The tapered outline of the base structure 812 and the tapered outline of the support structure 813 run substantially parallel to each other with an offset o. In the overlapping area 70 the support structure 813 has a rectangular outline.

FIG. 9a and 9b show an anchor area 910 according to another embodiment of the invention. FIG. 9a shows a top view and FIG. 9b a corresponding cross sectional view taken along the section line 'IX-IX' shown in FIG. 9a. The bridge 3 comprises an anchor structure 911 having a base structure 912 and a support structure 913 embedded within the base structure 912. For ease of illustration, the base material of the base structure 912 is shown in a transparent manner for the top view. The support structure 913 extends partly over the substrate 1 in a second overlapping area 70 and partly over the recess or opening 2 in a first overlapping area 71. The support structure 913 comprises three parts, namely two outer parts 913a and 913c and an inner part 913b. The inner part 913b may have in particular a rectangular outline and extends in the second overlapping area 70 over the substrate 1 and in the first overlapping area 71 over the recess or opening 2. The base structure 912 as well as the outer parts 913a and 913c comprise a tapered outline within an overlapping area 71a. More particularly, the base structure 912 provides an increasing width w₁ from an inner area 60 of the bridge 3 towards the substrate 1 and the outer parts of the support structures 913a, 913c provide an increasing width w₂ in a direction towards the substrate 1. Again the tapered outline of the base structure 912 and the tapered outline of the inner parts 913a, 913c of the support structures run substantially parallel to each other. In the overlapping area 70, the outer support structures 913a, 913c have a rectangular outline. The inner part 913b of the support structure 913 may extend further into the recess or opening 2 than the outer support structures 913a, 913b within an overlapping area 71b. This provides additional stability. The support structure 913 has a thickness t in the vertical z-direction and the base structure 912 a thickness T.

According to embodiments, the structures illustrated in FIGS. 6a, 6b, 7a, 7b, 8a, 8b and 9a, 9b may also comprise heating structures. More particularly, at least one of the arms 7 of the bridges 3 and the corresponding anchor structure may comprise a heating structure, in particular heater leads.

This is further illustrated in more detail with reference to the following figures.

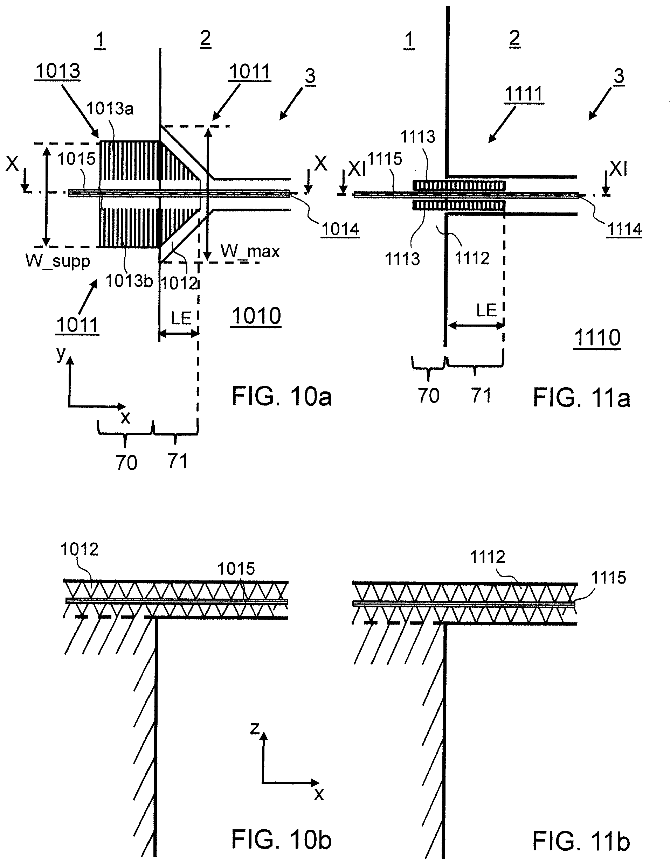

FIG. 10a shows a top view of an anchor area 1010 according to another embodiment of the invention and FIG. 10b a corresponding cross sectional view taken along the section line 'X-X' shown in FIG. 10a. For ease of illustration, the base material of a base structure 1012 is shown in a transparent manner for the top view.

The bridge 3 comprises an anchor structure 1011 having the base structure 1012 and a support structure 1013 embedded within the base structure 1012. The support structure 1013 extends partly over the substrate 1 in a second overlapping area 70 and partly over the recess or opening 2 in a first overlapping area 71. The support structure 1013 comprises two parts, namely parts 1013a and 1013b. The base structure 1012 as well as the parts 1013a and 1013b comprise a tapered outline within the overlapping area 71. The tapered outline of the base structure 1012 and the tapered outline of the support structures 1013a, 1013b run substantially parallel to each other. In the overlapping area 70, the two parts 1013a, 1013b have a rectangular outline.

In a central area of the anchor structure 1011, heating leads 1015 of a heating structure 1014 are provided. The heating leads 1015 establish functional elements and form an electrical connection between CMOS control circuitry integrated on the substrate 1 and a heater of the heating circuitry. The heating leads 1015 are arranged between the support structures 1013a and 1013b.

FIG. 11a shows a top view of an anchor area 1110 according to another embodiment of the invention and FIG. 11b a corresponding cross sectional view taken along the section line 'XI-XI' shown in FIG. 11a. For ease of illustration, the base material of the base structure 1112 is shown in a transparent manner for the top view.

The bridge 3 comprises an anchor structure 1111 having a base structure 1112 and a support structure 1113 embedded within the base structure 1112. The support structure 1113 extends partly over the substrate 1 in a second overlapping area 70 and partly over the recess or opening 2 in a first overlapping area 71. The top view of the support structure 1113 has a rectangular outline and the bridge 3 approaches the substrate 1 in a non-tampering manner. In other words, the bridge 3 and the substrate 1 form a substantially rectangular angle within the anchor area 1110. The anchor structure 1111 comprises heating leads 1115 of a heating structure 1114. The heating leads 1115 form an electrical connection between CMOS control circuitry integrated on the substrate 1 and a heater of the heating circuitry. The support structure 1113 may have various geometries for enclosing or partly enclosing the heating leads 1115. According to preferred embodiments, parts of the support structure are arranged in a vertical z-direction above and below the heating leads 1115. According to preferred embodiments, parts of the support structure 1113 are arranged in a lateral y-direction adjacent to the heating leads 1115.

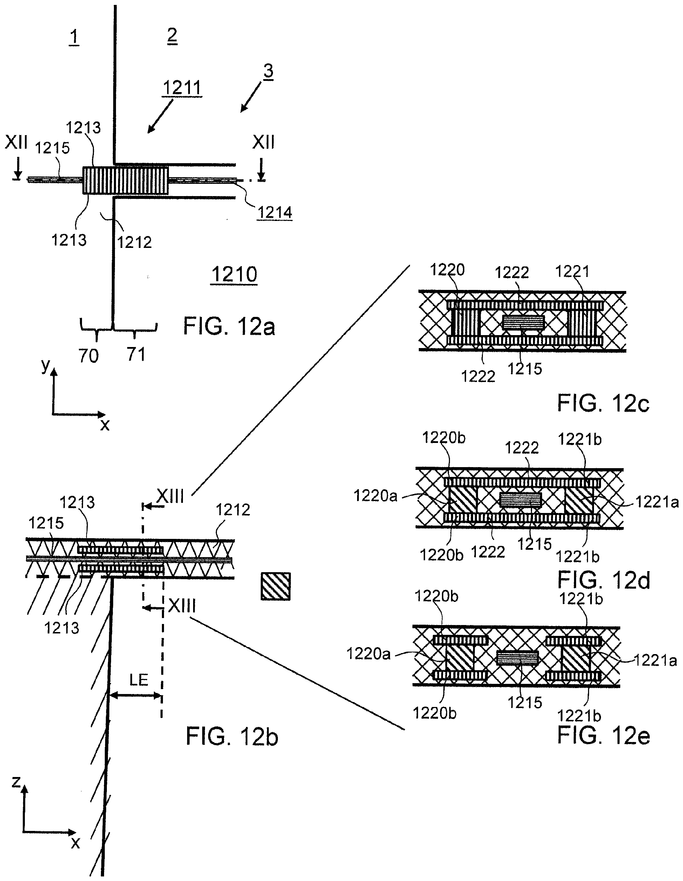

FIG. 12a shows a top view of an anchor area 1210 according to another embodiment of the invention and FIG. 12b a corresponding cross sectional view taken along the section line 'XII-XII' shown in FIG. 12a. For ease of illustration, the substrate/base material of the base structure 1212 is shown in a transparent manner for the top view.

FIG. 12c shows a corresponding cross sectional view of an embodiment taken along the section line 'XIII-XIII' shown in FIG. 12b. FIG. 12d shows a corresponding cross sectional view of another embodiment taken along the section line "XIII-XIII' shown in FIG. 12b and FIG. 12e shows a corresponding cross sectional view taken along the section line "XIII-XIII' shown in FIG. 12b of another embodiment of the invention.

The bridge 3 comprises an anchor structure 1211 having a base structure 1212 and a support structure 1213 embedded within the base structure 1212. The support structure 1213 extends partly over the substrate 1 in a second overlapping area 70 and partly over the recess or opening 2 in a first overlapping area 71. The top view of the support structure 1213 has a rectangular outline and the bridge 3 approaches the substrate 1 in a non-tapering manner. In other words, the bridge 3 and the substrate 1 form a substantially rectangular angle within the anchor area 1210. The anchor structure 1211 comprises heating leads 1215 of a heating structure 1214. The heating leads 1215 form an electrical connection between CMOS control circuitry integrated on the substrate 1 and a heater of the heating circuitry.

FIGS. 12c and 12d show exemplary embodiments of cross sectional profiles of the support structure 1213 which encloses the heater lead 1215 of the heating structure. The support structure 1213 of FIG. 12c comprises two double-T-beam structures 1220 and 1221 which are connected by connection elements 1222. The two double-T-beam structures 1220 and 1221 and the connection elements 1222 encloses the heating lead 1215. Between the heating lead 1215 and the double-T-beam structures 1220 and 1221 as well as between the heating lead 1215 and the connection elements 1222 there is arranged material of the base structure.

According to the embodiment illustrated in FIG. 12c, the supporting structure 1213 comprising the double-T-beam structures 1220 and 1221 and the connection elements 1222 are formed of the same material.

According to the embodiment illustrated in FIG. 12d, the double-T-beam structures 1220 and 1221 are formed by two different materials. More particularly, the double-T-beam structures 1220 and 1221 comprise webs 1220a and 1221a respectively of a first material and flanges 1220b and 1221b respectively of a second material, the second material being different from the first material. The connection elements 1222 which connect the flanges 1220b and 1221b are preferably made of the same materials as the flanges 1220b and 1221b. This is illustrated by the same shadings. With such double-T-beam structures of different materials, the stability of the anchor structure may be further improved and can be flexibly adapted to the needs of the respective bridge structure.

According to the embodiment illustrated in FIG. 12e, the double-T-beam structures 1220 and 1221 are formed separately without connection elements and they are arranged laterally adjacent to the heater lead 1215. The double-T-beam structures 1220 and 1221 of FIG. 12e comprise also webs 1220a and 1221a respectively of a first material and flanges 1220b and 1221b respectively of a second material, the second material being different than the first material.

Each of the first overlapping areas 71 shown in FIGS. 5a, 5b, 6a, 6b, 7a, 7b, 8a, 8b, 9a, 9b, 10a, 10b 11a, 11b and 12a, 12b have also longitudinal extension LE (in a longitudinal x-direction of the bridge 3) into the recess or opening 2 of more than 0.5 times of the thickness T of the bridge 3. Furthermore, the longitudinal extension LE is less than 0.25 times of the span length L of the respective bridge 3.

In the following some preferred dimensions of bridges 3 according to embodiments of the invention are given. The span length L of the bridge 3 between the opposing ends of the substrate (see. e.g. FIG 1, 2 and 3) may be between 10µm and 1 mm.

A preferred range of the span length L is between 100 and 300 µm. The width w of the arms 7 of the bridge in the inner area 60 may be between 1 µm and 300µm (see e.g. FIG 4a and 5a). A preferred width w is between 10 and 30 µm. The aspect ratio L/w may be according to embodiments in a range between 2 and 1000 with a preferred range between 5 and 20. The thickness T of the bridge 3 in the vertical z-direction may be in a range between 0.5 µm and 30 µm (see e.g. FIG 7b). A preferred range is between 1 and 10 µm.

The anchor length 1 of tapered anchor structures in the x-direction along the longitudinal extension of the bridge may be between 1µm and 100 µm. The anchor length 1 is understood as the extension of the tapered outline of tapered anchor structures, e.g. the anchor structure 411 of FIG. 4a, in the longitudinal x-direction of the bridges into the recess or opening as illustrated e.g. in FIG 4a. A preferred range is between 10 µm and 50 µm. The maximum anchor width w_max of the tapered outline of the anchor structures, e.g. of the anchor structure 411 of FIG. 4a, is between 3 times the width w of the bridge and 7 times the width w of the bridge. A preferred value of w_max is between 40 and 60 µm. The thickness t_add of the support structure that is arranged on top of the base structure as illustrated e.g. in FIGS. 6b and 7b is chosen such that a resulting total thickness (T + t_add) is between 1.0 x T and 5x T, wherein T is the thickness of the bridge. A preferred value for t_add is between 0.1 and 1.0 µm.

The thickness t of support structures that are embedded within the base structure may range between 0 and T, wherein T is the thickness of the bridge, as shown e.g. in FIG. 9b. A preferred value is between 50 and 150 nm.

According to preferred embodiments, the length of the first overlapping area 71 of the support structure extending partly over the recess or opening 2 in the x-direction as shown e.g. in figures 6a, 7b, 8b, 9b, 10b or 11b is less than 1/4 of the total span length L (see e.g. FIG.1) of the respective bridge 3 in the x-direction. According to even more preferred embodiments, the length of the first overlapping area 71 of the support structure extending partly over the recess or opening 2 in the x-direction as shown e.g. in figures 6a, 7b, 8b, 9b, 10b or 11b is less than 1/5, in particular less than 1/10 of the total span length L of the respective bridge 3.

The support length l_supp of support structures that extend within tapered anchor structures may vary between half of the thickness T of the bridge and the anchor length l of the tapered anchor structure in the longitudinal x-direction of the bridge. A preferred value is between 0.5 times and 1 times the length 1 of the anchor structure (see e.g. FIG. 9a). Hence according to embodiments, the support structure extends over the recess or opening with a minimum overlap in the direction of the bridge of at least half of the thickness of the bridge. In other words, the minimum overlap of the support structure with the suspended part of the bridge is at least in the range of half of the respective bridge thickness. This ensures a stabilization of the suspended bridge by the support structure.

The maximum support width w_supp of the support structure in the lateral y-direction may vary between the thickness t of the support structure and the maximum anchor width w_max of the anchor structure. A preferred value is between 0.85 times and 0.95 times w_max (see e.g. FIG 8a).

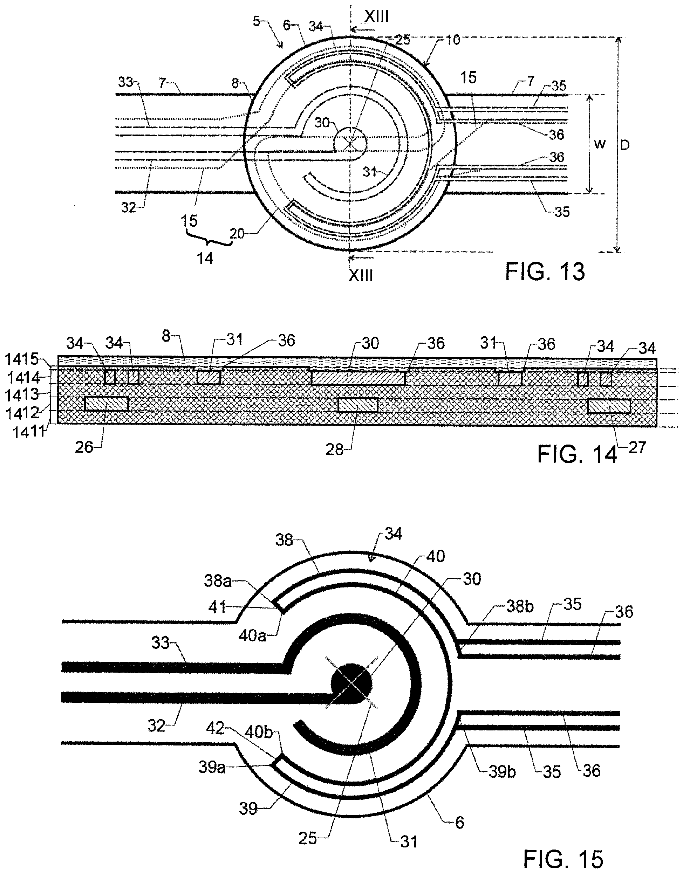

In the following, with reference to FIGS. 13-16, a more detailed view of embodiments of the electrical circuitry, in particular the heating structure and the heater leads, that may be embedded into the bridge structures 3 is provided. For ease of illustration, only a central area of the bridge 3 is shown. The supporting structures and the anchor areas are not shown in FIGS. 13-16.

More particularly, these figures show a bridge structure 3 with a central region 5 as well as the central ends of the arms 7 of the bridge structure 3.

As can best be seen from Figs. 13 and 14, central region 5 has a circular circumference 10 as defined above. Its diameter D is larger than the minimum width w of each arm 7.

Bridge structure 3 is formed by a plurality of dielectric layers and metal layers. The metal layers will be described in more detail below. The dielectric layers can, in particular, comprise layers of silicon oxide and/or silicon nitride.

In one embodiment, as shown in Fig. 14, bridge structure 3 can comprise at least one bottommost dielectric layer 1411, a first metal layer 1412, a second dielectric layer 1413, a second metal layer 1414, and a top dielectric layer 1415.

Bottommost dielectric layer 1411 can also be omitted, or only be present over part of first metal layer 1412, thereby exposing at least part of first metal layer 1412 at the bottom of hotplate 6.

In the shown embodiment, patch 8 of sensing material covers substantially all of central region 5, i.e. all of hotplate 6.

In one advantageous embodiment, patch 8 is only applied to one side of hotplate 6, namely to its top side, but not to its bottom side. Alternatively, and as mentioned below, patch 8 can also extend over at least part of the bottom side of hotplate 6.

The thickness of patch 8 is comparatively thin. Advantageously it is less than 20 µm, in particular less than 10 µm, and it is typically at least 1 µm.

### First metal layer:

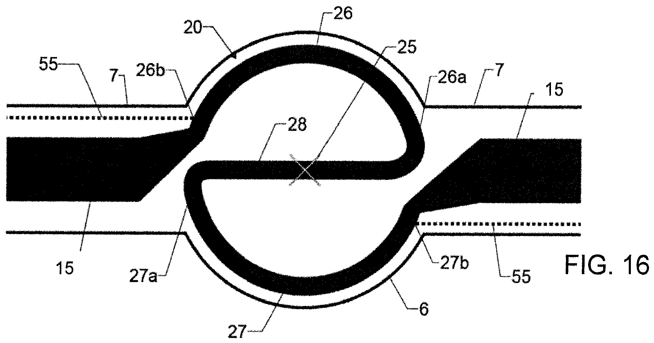

First metal layer 1412 is, in the shown embodiments, the bottommost metal layer in bridge structure 3. It is advantageously a tungsten or platinum or gold layer. The structures formed by first metal layer 1412 are shown in dotted lines in Fig. 13 and as black regions in Fig. 16.

First metal layer 1412 forms a heater 20 and heater leads 15. Heater 20 and heater leads 15 form together a heating structure 14.

The purpose of heater 20 is to heat the hotplate 6 to a temperature suitable for measuring one or more analyte(s).

The purpose of the heater leads 15 is to feed current to heater 20. They extend through separate arms 7 and also through anchor areas of the anchor structures towards CMOS circuitry, e.g. the CMOS circuitry 4a, 4b of FIG. 1.

The width of the heater leads 15 is larger than the width of the leads forming heater 20 in order to concentrate the heat generation to the hotplate 6. For example, the heater leads 15 may have a width of 5 - 10 µm, while the lead of heater 20 itself has a width between 1 - 5 µm.

Heater 20 is formed by a single lead extending between the inner ends of the heater leads 15.

Advantageously, heater 20 has two-fold symmetry under rotation about a center point 25 of hotplate 6 (which is denoted by a 45° cross in the drawings). It consists of a first section 26 extending along a circle around center point 25, a second section 27 extending along the same circle, and a radial section 28, the latter connecting a first end 26a of first section 26 with a first end 27a of second section 27. The second end 26b of first section 26 is connected to a first one of the heater leads 15, while the second end 27b of second section 27 is connected to the second one of the heater leads 15.

Advantageously, each of said first and second sections 26, 27 extends over an azimuthal angle of at least 120° around center point 25.

### Second metal layer:

Second metal layer 1414 is, in the shown embodiments, the topmost metal layer in bridge structure 3. It is advantageously a platinum or gold layer. The structures formed by second metal layer 1414 are shown in dashed lines in Fig. 13 and as black regions in Fig. 15.

In most of the embodiments shown, second metal layer 1414 forms a pair of electrodes 30, 31, electrode leads 32, 33, a temperature sensor 34 and temperature sensor leads 35, 36.

The purpose of the electrodes 30, 31 is to electrically contact patch 8 of sensing material in order to measure its resistance. They are exposed to patch 8 by a suitably placed windows 36 in topmost dielectric layer 1415.

The electrodes 30, 31 are coaxial to central point 25 of hotplate 6. In the embodiment shown, one electrode is a circular center electrode 30. The other electrode forms an outer electrode 31 and extends along an angle of at least 240°, in particular along an azimuthal angle of at least 270°, around center electrode 30. Advantageously, outer electrode 31 extends along a circle coaxial to center point 25.

The electrode leads 32, 33 connect the electrodes 30, 31 to the processing circuitry 4a, 4b of FIG. 1 and extend through a first one of the arms 7.

The purpose of temperature sensor 34 is to measure the temperatures on the hotplate 6.

According to an advantageous embodiment, temperature sensor 34 comprises a first section 38 and a second section 39 extending along a common outer circle, with each of said first and second sections advantageously extending over an azimuthal angle at least 90°. It further comprises a third section 40 extending along an inner circle, coaxial and at a distance to the outer circle. Advantageously, third section 40 extends over an azimuthal angle of at least 180°. Both, the inner and the outer circles, are advantageously coaxial to center point 25 of hotplate 6. One end 38a of first section 38 and one end 39a of second section 39 are connected to opposite ends 40a, 40b of third section 40 by means of connecting leads 41, 42, which connecting leads 40, 41 are advantageously formed by straight or curved sections much shorter than, advantageously at least ten times shorter than, any of the first, second and third sections 38 - 40. The second ends 38b, 39b of the first and second sections 38, 39 are connected to the temperature sensor leads 35, 36.

The temperature sensor leads 35,36 connect temperature sensor 34 to processing circuitry, e.g. the circuitry 4a, 4b of FIG. 1. They advantageously extend through a second one of the arms 7, i.e. not through the same arm as the electrode leads 32, 33.

In the embodiment shown, two separate temperature sensor leads 35, 36 are advantageously connected to second end 38b of first section 38, and two separate temperature sensor leads 35, 36 are connected to second end 39b of second section 39, which allows to carry out a four point measurement with one pair 36 of the temperature sensor leads carrying a current and the other pair 35 being used for measuring the voltage drop over temperature sensor 34, thereby eliminating any voltage drop over the current carrying leads.

A "platinum layer" or a "tungsten layer" is understood to be a layer comprising at least 50%, in particular at least 90%, of said material (platinum or tungsten). The layer is typically not a continuous layer, but a structured layer e.g. forming one or more metal leads.

Similarly, a heater "of tungsten" designates a heater comprising at least 50%, in particular at least 90%, of tungsten.

In the above examples, central region 5 has circular circumference. However, central region 5 may also have non-circular circumference, such as rectangular or polygonal circumference. An example of bridges with rectangular circumference is shown in Fig. 3.

While there are shown and described presently preferred embodiments of the invention, it is to be distinctly understood that the invention is not limited thereto but may be otherwise variously embodied and practiced within the scope of the following claims.

## Claims

1. A sensor for measuring fluid parameters, in particular a gas sensor, comprising
a substrate (1);
a recess or opening (2) arranged in said substrate (1);
a bridge (3) extending over said recess or opening (2) and being anchored in said substrate (1) at two or more anchor areas;
wherein
said bridge has a span length and a thickness;
said bridge (3) comprises
a temperature modification structure, in particular a heating structure (14) and/or a cooling structure; and
at least two anchor structures (11) in said anchor areas (10),
wherein each of the anchor structures comprise
a base structure (12) comprising a base material; and
a support structure (13) comprising a support material, the support structure being adapted to increase the mechanical stability of the anchor structure; wherein
the base material is a dielectric material and the support material is a metallic material; and
the support structures of the at least two anchor structures extend partly into the recess or opening in a first overlapping area, wherein the first overlapping area has a longitudinal extension into the recess or opening of more than 0.5 times the thickness of the bridge, but of less than 0.25 times of the span length of the bridge.

2. The sensor of claim 1, wherein
the longitudinal extension of the support structures into the recess or opening is less than 0.2 times the span length of the bridge;
preferably less than 0.1 times the span length of the bridge;
more preferably in a range between 1 micrometer and 100 micrometers; and
most preferably in a range between 10 micrometers and 20 micrometers.

3. The sensor of claim 1 or 2, wherein
the anchor structure has a tapered outline, the tapered outline being adapted to increase the physical dimensions of the bridge from an inner area of the bridge towards the substrate, wherein in in at least part of each anchor area an increase of the width of the bridge in a lateral direction is provided, in particular an increase to between 3 and 7 times of the width in the inner area, and in particular wherein the tapered outline continuously increases the width towards the substrate, and in particular wherein the tapered outline is rounded with a radius between one time and three times of the width in the inner area of the bridge, and in particular wherein the tapered outline provides in addition an increase of the thickness of the bridge in a vertical direction.

4. The sensor of claims 1 to 3, wherein
at least one of the anchor structures (11) comprises a current lead (15) of the temperature modification structure (14), and in particular wherein the support structure is separated from the current lead by the dielectric material of the base structure.

5. The sensor of any of the preceding claims, wherein the support structure is adapted to improve one or more mechanical parameters of the anchor structure, in particular the rigidity of the anchor structure and/or the uniformity of the stress and strain levels of the anchor structure.

6. The sensor of any of the preceding claims, wherein
the base material has a different Young's modulus than the support material; and/or
the compressive strength of the base material is different from the compressive strength of the support material.

7. The sensor of any of the preceding claims, wherein the support structure is arranged on top of and/or below the base structure.

8. The sensor of any of the preceding claims, wherein the support structure is embedded within the base structure.

9. The sensor of any of the preceding claims, wherein
the support material is a metal selected from the group consisting of: Al, Cu, Pt, W, Ti and TiN; and
the support structure is electrically inactive.

10. The sensor of any of the preceding claims, wherein
the sensor is a CMOS sensor ;
the support structures are specifically designed to increase the stability of the bridge; and
the support structures are not dummy filling structures required according to CMOS design rules.

11. The sensor of any of the preceding claims, wherein
the support structure extends partly over and/or into the substrate in a second overlapping area.

12. The sensor of any of the preceding claims, wherein the support structure has a tapered outline, the tapered outline being adapted to provide an increasing width and/or an increasing height of the support structure from an inner area of the bridge towards the substrate; and in particular wherein a tapered outline of the anchor structure and the tapered outline of the support structure run at least partly parallel to each other.

13. The sensor of any of the preceding claims, wherein the support structure comprises a cross sectional profile which encloses the current lead of the temperature modification structure.

14. The sensor of any of the preceding claims, wherein the support structure comprises one or more T-beam structures and/or one or more double-T-beam structures.

15. The sensor of claim 14, wherein a first T-beam structure or a first double-T-beam structure is arranged laterally adjacent to the current lead and a second T-beam structures or a second double-T-beam structure is arranged laterally adjacent to the current lead and opposite to the first T-beam structure and the first double-T-beam structure respectively.

16. The sensor of any of the preceding claims, wherein the support structure comprises a plurality of layers of support material.
